# Europäisches Patentamt
# European Patent Office
# Office européen des brevets

(11) Veröffentlichungsnummer: **0 097 354**
**B1**

(12) **EUROPÄISCHE PATENTSCHRIFT**

(45) Veröffentlichungstag der Patentschrift:
09.03.88

(51) Int. Cl.⁴: **H 04 Q 3/00,** H 04 M 19/00

(21) Anmeldenummer: **83106010.8**

(22) Anmeldetag: **20.06.83**

(54) Schaltungsanordnung zur Feststellung des Schaltzustandes einer Teilnehmeranschlussleitung in Fernmeldeanlagen.

(30) Priorität: **22.06.82 DE 3223292**

(43) Veröffentlichungstag der Anmeldung:
**04.01.84 Patentblatt 84/1**

(45) Bekanntmachung des Hinweises auf die Patenterteilung:
**09.03.88 Patentblatt 88/10**

(84) Benannte Vertragsstaaten:
**AT CH FR GB LI NL SE**

(56) Entgegenhaltungen:
**EP - A - 0 087 784**

(73) Patentinhaber: **Siemens Aktiengesellschaft Berlin und München, Wittelsbacherplatz 2, D-8000 München 2 (DE)**

(72) Erfinder: **Nagler, Werner, Dipl.-Ing., Lipowskystrasse 8, D-8000 München 70 (DE)**
Erfinder: **Ossler, Walter, Wallbergstrasse 38, D-8034 Germering (DE)**
Erfinder: **Kovar, Kurt, Graf-Spreti-Strasse 4, D-8037 Olching (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schaltungsanordnung zur Feststellung des Schaltzustandes einer Teilnehmeranschlussleitung in Fernmeldeanlagen, deren Leitungsadern über jeweils ein zur Umschaltung zwischen hochohmiger und niederohmiger Speisung zu einem Teil niederohmig mit Hilfe von Schaltmitteln überbrückbares Speiseglied an einen der beiden Pole der Speisespannungsquelle angeschlossen sind, durch Bewertung des Potentialzustandes an leitungsadernbezogenen festen Ankopplungspunkten in der den amtsseitigen Abschluss der jeweiligen Teilnehmeranschlussleitung bildenden Teilnehmeranschlussschaltung, mit einer mittels eines zyklisch betriebenen ersten elektronischen Auswahlschaltgliedes jeweils nacheinander an eine Mehrzahl von Teilnehmeranschlussleitungen anschaltbaren Indikationsschaltung, die abhängig von dem durch eine zentrale Steuereinrichtung eingestellten Betriebszustand einer jeden Teilnehmeranschlussleitung zur Durchführung verschiedenartiger Indikationen ausgenutzt wird, wozu sie mit unterschiedlichen von der Art der durchzuführenden Indikation abhängigen Bezugsspannungswerten beaufschlagt wird, mit mittels eines zweiten elektronischen Auswahlschaltgliedes für die Indikationsschaltung in Abhängigkeit von der Schaltstellung des ersten Auswahlschaltgliedes jeweils gesondert anschaltbaren bzw. in Abhängigkeit von der Art der durchzuführenden Indikation wirksam schaltbaren, jeweils Siebzwecken dienenden Kondensatoren, sowie mit Schaltmitteln zum Anschalten einer Rufwechselspannung an die Adern der Teilnehmeranschlussleitung.

Durch eine Schaltungsanordnung dieser Art (deutsche Patentanmeldung DE-A-29 39 009) ist wegen der Mehrfachausnutzung ein und derselben Indikationsschaltung für unterschiedliche Indikationen und für eine Mehrzahl von Teilnehmeranschlussleitungen der Schaltungsaufwand pro Teilnehmeranschlussleitung relativ gering. Insbeondere der Betrieb derjenigen Schaltungsteile, die Voraussetzung für eine solche Mehrfachausnutzung sind, also insbesondere des ersten und zweiten Auswahlschaltgliedes, ist aber die Ursache von Störungen, die zu Fehlauswertungen führen können.

Die Aufgabe der vorliegenden Erfindung besteht nun darin eine Schaltungsanordnung der obengenannten Art derart zu verbessern, dass die Auswertesicherheit erhöht wird.

Erfindungsgemäss wird diese Aufgabe dadurch gelöst, dass bei einer solchen Schaltungsanordnung die ersten und zweiten elektronischen Auswahlschaltglieder jeweils anlässlich eines Schaltstellungswechsels über die Zeitdauer des betreffenden Schaltvorganges hinaus kurzzeitig und das erste Auswahlschaltglied jeweils anlässlich des An- und Abschaltens der Rufwechselspannung während einer der Ansprech- und Abfallzeit der genannten Anschaltemittel entsprechenden Zeit gegen Stromdurchgang gesperrt werden.

Da die elektronischen Auswahlschaltglieder in der Regel sowieso in Form eines von einem Adressensignal gesteuerten Drehschalters mit einem in Reihe geschalteten Aus-Schalter realisiert sind, erfordert die erfindungsgemässe Massnahme keinen besonderen Mehraufwand. Es wird durch sie vermieden, dass negativ gepolte Störimpulse, die beim Umschalten von einem Multiplexereingang auf den nächsten entstehen können, die Indikationsschaltung beeinflussen. Es wird ferner vermieden, dass Ladungen zwischen den Eingängen verschleppt werden, was ebenfalls eine Ursache für Fehlauswertungen sein könnte.

Dadurch, dass das erste Auswahlschaltglied jeweils anlässlich der An- und Abschaltung der Rufwechselspannung über die Ansprech- und Abfallzeit des zum Anschalten der Rufwechselspannung verwendeten Relais hinweg gesperrt bleibt, sind Störungen vermieden, die dadurch zustande kommen, dass die dem neuen Betriebszustand, der vom Betriebszustand «Rufphase» aus eingestellt werden soll, entsprechende Schaltschwelle der Indikationsschaltung schon eingestellt ist, noch nicht jedoch die Relais, die eine Umschaltung zwischen niederohmiger und hochohmiger Speisung bewirken bzw. das Relais, das der Anschaltung der Rufwechselspannung dient. Ohne die erfindungsgemässe Massnahme könnte ein solcher zwischenzeitlich unzutreffender Schwellwert der Indikationsschaltung zu Fehlauswertungen führen.

Gemäss einer weiteren Ausgestaltung der Erfindung wird während der Zeitdauer der Sperrung des ersten Auswahlschaltgliedes für die Indikationsschaltung ein Schwellwert wirksam geschaltet, der von dem durch die Indikationsschaltung eine Zykluszeitspanne vorher abgegebenen Signal in der Weise abhängig gemacht ist, dass er die Aufrechterhaltung dieses Signals bewirkt. Durch diese Massnahme ist erreicht, dass die während der Zeitdauer der Sperrung des ersten Auswahlschaltgliedes eingangsseitig offen liegende Indikationsschaltung nicht von Einstreuungen zur Abgabe von Fehlimpulsen veranlasst werden kann.

Noch eine andere Weiterbildung der Erfindung besteht darin, dass zusätzlich zu den genannten Massnahmen entsprechend einer schon vorgeschlagenen Lösung (deutsche Patentanmeldung DE-A-32 07 318 (EP-A-877 84 (07.09.83)) die Siebkondensatoren nur im Betriebszustand «Gespräch/Wahlaufnahme» nicht wirksam geschaltet sind. Die Siebkondensatoren sind aufgrund dieser Massnahme auch in den Betriebszuständen «Ruf», «Rufpause» und «Ruhe» angeschaltet und wirken damit auch gegen Störimpulse, die bei Übergängen in die letztgenannten Zustände auftreten können. Solche Störimpulse sind die Folge von Einschwingvorgängen, die sich wegen der Übertragerinduktivität der Teilnehmeranschlussleitung und des Weckerkreises in der Teilnehmerstation bei solchen Übergängen ergeben. Im Betriebszustand «Gespräch/Wahlaufnahme» müssen die Siebkondensatoren abgeschaltet bleiben, um Verfälschungen der Wahlimpulse zu vermeiden.

Noch eine andere Ausgestaltung der Erfindung besteht darin, den genannten Kondensatoren hochohmige Widerstände parallel zu schalten, so dass diese sich im Betriebszustand «Gespräch/Wahlaufnahme», in dem sie nicht angeschaltet sind, entladen können, so dass es nicht zu Fehlauswertungen dadurch kommt, dass in einem vorangegangenen Betriebszustand zustande gekommene Kondensatoraufladungen sich auf einen nachfolgenden Betriebszustand, in dem ein Siebkondensator wirksam geschaltet ist, auswirken können.

Nachstehend wird die Erfindung anhand eines Ausführungsbeispieles unter Bezugnahme auf eine Figur näher erläutert.

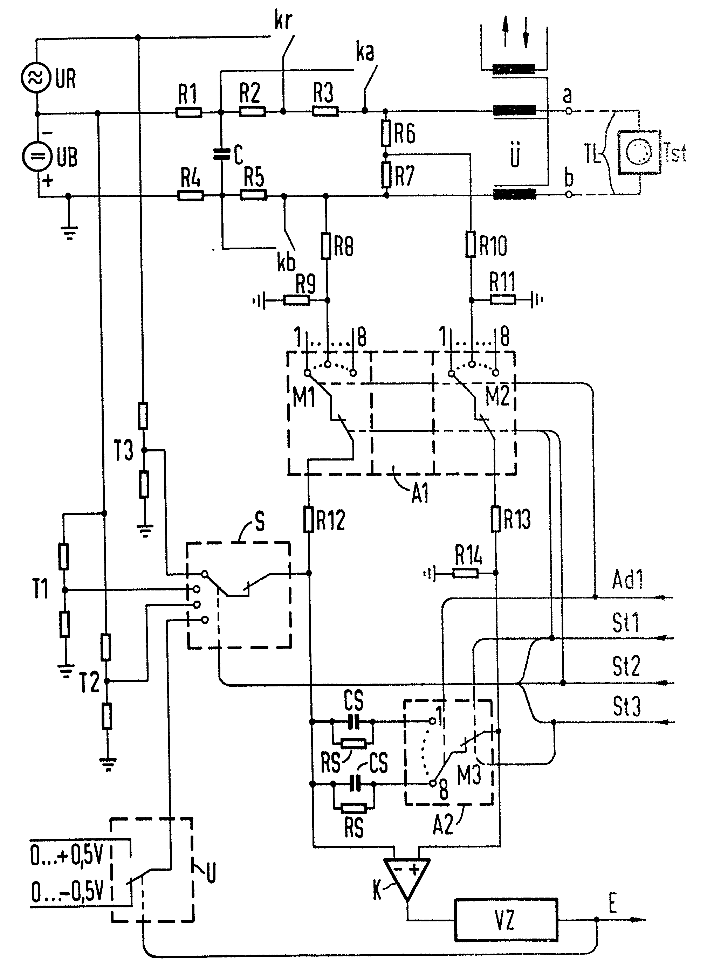

In der Figur ist in zum Verständnis der Erfindung erforderlichen Umfang eine Teilnehmeranschlussschaltung TA dargestellt, die den amtsseitigen Abschluss einer Teilnehmeranschlussleitung TL darstellt, an die eine Teilnehmerstation Tst angeschossen ist. Zu dieser Teilnehmeranschlussschaltung gehört ein Gabelbertrager Ü für den Zweidraht-/Vierdraht-Übergang zwischen der zweidrähtigen Teilnehmeranschlussleitung TL und dem vierdrähtig durchschaltenden Koppelfeld der Vermittlungsstelle, zu der die Teilnehmeranschlussschaltung gehört.

Der Anschluss für die a-Ader der Teilnehmeranschlussleitung ist über Speisewiderstände R1, R2 und R3 an den negativen Pol einer zentralen Speisebatterie UB angeschlossen, der Anschluss für die b-Ader der Teilnehmeranschlussleitung steht über Speisewiderstände R4 und R5 mit dem an Erdpotential liegenden Pol der Speisebatterie in Verbindung. Die Speisewiderstände R2 und R3, die relativ hochohmig sind, können durch einen Kontakt ka eines Relais A niederohmig überbrückt werden, entsprechendes gilt für den hochohmigen Widerstand R5 durch den Kontakt kb eines Relais B. Durch entsprechende Betätigung der genannten Kontakte ka und kb kann also zwischen hochohmiger und niederohmiger Speisung umgeschaltet werden. Zwischen den Verbindungspunkten der Speisewiderstände R1 und R2 und der Speisewiderstände R4 und R5 ist ein ebenfalls zur Speiseschaltung gehörender Kondensator C angeschlossen. Über einen Kontakt kr eines Relais R kann am Verbindungspunkt der Widerstände R2 und R3 die von einem mehrerer Teilnehmeranschlussschaltungen gemeinsamen Rufgenerator UR gelieferte Rufwechselspannung eingespeist werden.

Die dargestellte Teilnehmeranschlussschaltung weist Bezugspunkte für die Bewertung der Potentialzustände auf der Teilnehmeranschlussleitung TL auf, wozu einmal der Verbindungspunkt zweier Widerstände R6 und R7 dient, die einen hochohmigen Querzweig zwischen den Anschlüssen für die Leitungsadern a und b bilden und zum anderen derjenige Anschlusspunkt des Widerstandes R5 dient, der nicht unmittelbar mit einem Pol der Speisespannungsquelle UB verbunden ist. Als Ankopplungspunkte dienen nicht unmittelbar die genannten Bezugspunkte, sondern jeweils Teilerpunkte eines Spannungsteilers, der zwischen dem genannten Schaltungspunkt und Erdpotential liegt. Es sind dies die aus den Widerständen R8 und R9 bzw. R10 und R11 bestehenden Spannungsteiler.

Die nachfolgend beschriebene Indikationsschaltung zur Feststellung des Schaltzustandes einer Teilnehmeranschlussleitung TL ist zentral vorgesehen, also beispielsweise an acht Teilnehmeranschlussleitungen bzw. Teilnehmeranschlussschaltungen anschaltbar. Eine solche Anschaltung erfolgt mit Hilfe eines ersten elektronischen Anschaltgliedes A1, das aus zwei Multiplexern M1 und M2 besteht, die mit ihren Eingängen jeweils an einen Teilerpunkt der genannten Spannungsteiler der beispielsweise acht Anschlussschaltungen angeschlossen sind und ausgangsseitig über einen Widerstand R12 bzw. R13 mit einem invertierenden und einem nichtinvertierenden Eingang eines das eigentliche Indikationselement darstellenden Komparators K angeschlossen sind.

Die Multiplexer M1 und M2 sind ihrer technischen Realisierung entsprechend als die Reihenschaltung eines Drehschalters und eines Aus-Schalters dargestellt, die, worauf noch eingegangen werden wird, getrennt angesteuert werden können.

Die Indikationsschaltung lässt sich zur Durchführung verschiedenartiger Indikationen ausnutzen, nämlich sowohl zur Anreizindikation, als auch zur Feststellung eines Schleifenschlusses aufgrund eines Rufes, als auch zur Feststellung des Schleifenzustandes während der Wahl. Mit Hilfe eines Selektors S können dementsprechend verschiedene Schwellwerte für den Komparator K wirksam geschaltet werden, indem dessen invertierender Eingang wahlweise mit dem Teilerpunkt eines der Spannungsteiler T1, T2 und T3 verbindbar ist.

Den Eingängen des Komparators sind jeweils aus der Parallelschaltung eines Kondensators CS und eines diesem parallelgeschalteten hochohmigen Widerstandes RS bestehende Siebglieder mit Tiefpasscharakteristik parallel schaltbar, wozu ein zweites Auswahlschaltglied A2 ausgenutzt wird, das ebenfalls einen Multiplexer M3 beinhaltet, der funktionsmässig wie ein Drehschalter mit dazu in Reihe liegendem Ausschalter wirkt. Die Schaltstellung des Drehschalters des Multiplexers ist abhängig von der Teilnehmeranschlussschaltung, an die die Indikationsschaltung gerade angeschaltet ist, die Schaltstellung des Aus-Schalters grundsätzlich davon, ob eine Indikation durchgeführt werden soll, bei der die Wirksamschaltung des Siebgliedes vorgesehen ist, gemäss den obenstehenden Ausführungen trifft dies für sämtliche Betriebszustände ausser dem Betriebszustand «Gespräch/Wahlaufnahme» zu.

Das Ausgangssignal des Komparators K wird über ein Verzögerungsglied Vz, dessen Verzögerungszeit die Anschaltzykluszeit der Indikationsschaltung bei der Zuordnung zu den acht Teilnehmeranschlussschaltungen ist, und die beispielsweise 4 ms beträgt, einerseits an einen Ausgang E gegeben, von dem aus sie einer weiteren Verarbeitung zugeführt werden, andererseits an den Steuereingang eines Umschalters U, der je nach Schaltstellung schwach positives oder schwach negatives Potential an den schon erwähnten Selektor S leifert, über den demnach eine weitere Schwellspannung an den invertierenden Eingang des Komparators K gelegt werden kann.

Nachstehend wird die Funktion der beschriebenen Schaltungsanordnung noch näher erläutert. Wenn ein Adressenwechsel vorliegt, also die Indikationsschaltung von einer Teilnehmeranschlussschaltung auf die andere geschaltet wird, erfolgt zwar ein unverzügliches Weiterschalten der Drehschalterteile der Multiplexer M1 bis M3 in den Auswahlschaltgliedern A1 und A2, was durch eine Verbindung des Adresseneinganges Ad1, dem die genannten Adressen zugeführt werden, mit einem Steuereingang dieser Drehschalterteile angedeutet ist, während dieses Umschaltvorganges sind jedoch die genannten Multiplexer M1 bis M3 kurzzeitig, d.h. für einige µs gesperrt, was durch eine Verbindung zwischen einem Steuersignaleingang St1, dem im Falle eines solchen Adressenwechsels ein Steuersignal zugeführt wird, und den Steuereingängen der Aus-Schalter angedeutet ist. Die vorstehend diskutierten Störimpulse, die durch den Betrieb der Multiplexer zustande kommen können, sind hiermit vermieden.

Nun wird die Sperrung der Multiplexer während der Relaisschaltung behandelt.

Im Betriebszustand «Rufphase» ist einerseits das Relais B erregt, so dass im Vergleich zum Betriebszustand «Ruhe», in dem keines der Relais A und B erregt ist, ein höherer Speisestrom fliesst, ferner ist das Relais R zur Einspeisung des Rufwechselstromes erregt. Im Betriebszustand «Rufpause» sind die Relais A und B erregt, womit bezüglich der Speisung dieselben Verhältnisse vorliegen wie beim Betriebszustand «Gespräch/Wahlaufnahme», das Relais R ist nicht erregt. Vom Betriebszustand «Gespräch/Wahlaufnahme» unterscheidet sich der Betriebszustand «Rufpause» jedoch dadurch, dass das betreffende Siebglied CS/RS wirksam geschaltet ist, was für den Betriebszustand «Gespräch/Wahlaufnahme» aus den obengenannten Gründen nicht zutrifft.

Anlässlich des An- und Abschaltens der Rufwechselspannung, also bei Übergängen in den Betriebszustand «Rufphase» bzw. vom Betriebszustand «Rufphase» in den Betriebszustand «Rufpause» sind erfindungsgemäss die Multiplexer M1 und M2 des Auswahlschaltgliedes A1 während einer Zeitspanne gegen Stromdurchgang gesperrt, die der Ansprech- bzw. Abfallzeit der zu betätigenden Relais entspricht. In der Figur ist dies durch eine Verbindung des Steuereinganges St2, bei dem im Falle solcher Betriebsartenwechsel ein entsprechendes Steuersignal auftritt, mit den Ausschaltern der Multiplexer M1 und M2 veranschaulicht. Die Sperrzeiten liegen in der Grössenordnung von einigen ms.

Die Eingänge des Komparators K können während dieser Sperrzeit nicht offen liegen, was die Gefahr von Einstreuungen zur Folge hätte, die zu Fehlauswertungen führen könnten, da gemäss der schon erwähnten weiteren Ausgestaltung der Erfindung nunmehr gesteuert durch das vom Komparator K einen Indikationszyklus vorher gelieferte und durch das Verzögerungsglied VZ entsprechend verzögerte Ergebnissignal und aufgrund entsprechender Einstellung des Selektors S an den invertierenden Eingang des Komparators schwach negatives oder schwach positives Potential angelegt wird, so dass, da der nichtinvertierende Eingang des Komparators über den Widerstand R14 an Erdpotential liegt, der Schaltzustand aufrechterhalten wird, den der Komparator aufgrund der einen Indikationszyklus vorher herrschenden Potentialverhältnisse eingenommen hatte. Mit Aufhebung der Sperre der Multiplexer M1 und M2 entfällt auch die Beaufschlagung des Komparators mit dem genannten zusätzlichen Schwellwert, statt dessen wird der dem Betriebszustand «Rufphase» oder dem Betriebszustand «Rufpause» entsprechende Schwellwert wirksam.

Während des Betriebszustandes «Gespräch/Wahlaufnahme», in dem die Siebkondensatoren nicht wirksam geschaltet sind, was durch entsprechende Ansteuerung eines Ausschalters des Multiplexers M3 im Auswahlschaltglied A2 über einen Steuereingang St3 erreicht wird, können sich diese über den erfindungsgemäss jeweils parallelgeschalteten hochohmigen Widerstand RS entladen, so dass nicht zu befürchten ist, dass bei einem nachfolgenden Übergang in den Betriebszustand «Ruhe», in dem die Siebglieder wieder wirksam geschaltet sind, Restladungen der Kondensatoren zum kurzzeitigen Ansprechen der Kondensatoren führen.

**Patentansprüche**

1. Schaltungsanordnung zur Feststellung des Schaltzustandes einer Teilnehmeranschlussleitung (TL) in Fernmeldeanlagen, deren Leitungsadern (a, b) über jeweils ein zur Umschaltung zwischen hochohmiger und niederohmiger Speisung zu einem Teil niederohmig mit Hilfe von Schaltmitteln (Ka, Kb) überbrückbares Speiseglied an einen der beiden Pole der Speisespannungsquelle (UB) angeschlossen sind, durch Bewertung des Potentialzustandes an leitungsadernbezogenen festen Ankopplungspunkten in der den amtsseitigen Abschluss der jeweiligen Teilnehmeranschlussleitung bildenden Teilnehmeranschlussschaltung, mit einer mittels eines zyklisch betriebenen ersten elektronischen Auswahlschaltgliedes (A1) jeweils nacheinander an eine Mehrzahl von Teilnehmeranschlussleitungen anschaltbaren Indikationsschaltung (K), die abhängig von dem durch eine zentrale Steuereinrichtung eingestellten Betriebszustand einer jeden Teilnehmeranschlussschaltung zur Durchführung verschiedenartiger Indikationen ausgenutzt wird, wozu sie mit unterschiedlichen, von der Art der Indikationen abhängigen Bezugspannungswerten beaufschlagt wird, mit mittels eines zweiten elektronischen Auswahlschaltgliedes (A2) für die Indikationsschaltung (K) in Abhängigkeit von der Schaltstellung des ersten Auswahlschaltgliedes (A1) jeweils gesondert anschaltbaren bzw. in Abhängigkeit von der Art der durchzuführenden Indikation wirksam schaltbaren, jeweils Siebzwecken dienenden Kondensatoren (CS), sowie mit Schaltmitteln (kr) zum Anschalten einer Rufwechselspannung (UR) an die Adern der Teilnehmeranschlussleitung, dadurch gekennzeichnet, dass die ersten und zweiten elektronischen Auswahlschaltglieder (A1, A2) jeweils anlässlich eines Schaltstellungswechsel über die Zeitdauer des betreffenden Schaltvorganges hinaus kurzzeitig und das erste Auswahlschaltglied (A1) jeweils anlässlich des An- und Abschaltens der Rufwechselspannung (UR) während einer den Ansprech-Abfallzeiten der genannten Anschaltemittel (kr) und Schaltmittel (ka, kb) zur Umschaltung zwischen hoch- und niederohmiger Speisung entsprechenden Zeit gegen Stromdurchgang gesperrt werden.

2. Schaltungsanordnung nach Anspruch 1, dadurch gekennzeichnet, dass jeweils während der Zeitdauer der Sperrung des ersten Auswahlschaltgliedes (A1) für die Indikationsschaltung (K) ein Schwellwert wirksam geschaltet wird (U, S), der von dem durch die Indikationsschaltung eine Zykluszeitspanne vorher abgegebenen Signal (E), in der Weise abhängig gemacht ist, dass er die Aufrechterhaltung dieses Signals bewirkt.

3. Schaltungsanordnung nach Anspruch 1 oder 2, dadurch gekennzeichnet, dass die genannten Kondensatoren (CS) nur im Betriebszustand «Gespräch/Wahlaufnahme» nicht wirksam geschaltet sind.

4. Schaltungsanordnung nach Anspruch 3, dadurch gekennzeichnet, dass den genannten Kondensatoren (CS) jeweils ein hochohmiger Widerstand (RS) parallelgeschaltet ist.

**Claims**

1. A circuit arrangement for determining the switching state of a subscriber connection line (TL) in telecommunications systems, the line wires (a, b) of which are each connected to one of the two poles of the supply voltage source (UB) via a supply element which, for switch-over between high-ohmic and low-ohmic supply, can in part be bridged in low-ohmic fashion by means of switching means (Ka, Kb), by evaluating the potential state at line-wire-related, fixed coupling points in the subscriber connection circuit which forms the exchange-end terminal of the respective subscriber connection line, with an indication circuit (K) which, by means of a cyclically operated, first electronic selection switching element (A1), can be consecutively connected to a plurality of subscriber connection lines, and which, in dependence upon the operating state of each subscriber connection circuit, set by a central control device, is used to carry out different kinds of indications, for which purpose it is supplied with different reference voltage values which depend upon the nature of the indications, with capacitors (CS) which can each be separately connected by means of a second electronic selection switching element (A2) for the indication circuit (K) in dependence upon the switching position of the first selection switching element (A1), and which can be actuated in dependence upon the nature of the indication which is to be carried out, and which each serve for filtering purposes, and with switching means (kr) which serve to connect an a.c. ringing voltage (UR) to the wires of the subscriber connection line, characterised in that the first and second electronic selection switching elements (A1, A2) are each temporarily blocked in respect to the passage of current in the event of a switching position change in excess of the duration of the respective switching process, and that the first selection switching element (A1) is blocked in respect of the passage of current in the event of the connection and disconnection of the ringing a.c. voltage (UR) during a time which corresponds to the response- and drop-out times of the aforesaid connection means (kr) and switching means (ka, kb) which effect a switch-over between high-ohmic and low-ohmic supply.

2. A circuit arrangement as claimed in claim 1, characterised in that for the duration of the blockage of the first selection switching element (A1) for the indication circuit (K) a threshold value is actuated (U, S) which is rendered dependent upon the signal (E), emitted by the indication circuit one cycle time earlier, in that it serves to maintain this signal.

3. A circuit arrangement as claimed in claim 1 or claim 2, characterised in that it is only during the «conversation/dialling reception» operating state that the aforesaid capacitors (CS) are not actuated.

4. A circuit arrangement as claimed in claim 3, characterised in that a highly ohmic resistor (RS) is connected in parallel with each of the aforesaid capacitors (CS).

**Revendications**

1. Montage pour déterminer l'état de commutation d'une ligne d'abonné (TL) située dans des installations de télécommunications et dont les conducteurs (A, B) sont raccordés par l'intermédiaire d'un circuit respectif d'alimentation, qui peut être shunté pour une part avec une faible valeur ohmique à l'aide de moyens de commutations (Ka, Kb) pour réaliser la commutation entre une alimentation à valeur ohmique élevée et une alimentation à faible valeur ohmique, à l'un des deux pôles de la source (UB) de tension d'alimentation, au moyen d'une évaluation de l'état de potentiel présent en des points fixes de couplage, qui sont associés aux conducteurs de la ligne et sont situés dans le circuit de raccordement d'abonné qui constitue la terminaison, côté central, de la ligne respective d'abonné, et comportant un circuit indicateur (K), qui peut être raccordé respectivement successivement à une multiplicité de lignes d'abonnés au moyen d'un premier circuit électronique de sélection (A1), fonctionnant de façon cyclique, et qui est utilisé, en fonction de l'état de fonctionnement réglé par un dispositif central de commande, de chaque circuit de raccordement d'abonné, pour fournir différents types d'indications auquel cas, à cet effet, ce circuit indicateur est chargé par différentes valeurs de tension de référence qui dépendent du type des indications, et comportant des condensateurs (CS) pouvant être raccordés respectivement séparément, à l'aide d'un second circuit électronique de sélection (A2) pour le circuit indicateur (K) et en fonction de la position de commutation du premier circuit de sélection (A1), ou pouvant être placé à l'état actif en fonction du type de l'indication devant être fournie et utilisés respectivement à des fins de filtrage, ainsi que des moyens de commutation (kr) servant à appliquer une tension alternative d'appel (UR) aux conducteurs de la ligne d'abonné, caractérisé par le fait que les premier et second circuits électroniques de sélection (A1, A2) sont bloqués vis-à-vis du passage du courant pendant un bref intervalle de temps pendant la durée du processus de commutation considéré, respectivement à l'occasion d'un changement de la position de commutation et que le premier circuit de sélection (A1) est bloqué vis-à-vis du passage du courant, respectivement à l'occasion du raccordement ou du débranchement de la tension alternative d'appel (UR), pendant une durée correspondant aux temps de réponse et de retombée desdits moyens de raccordement (Kr) et desdits moyens de commutation (Ka, Kb) servant à réaliser la commutation entre l'alimentation à valeur ohmique élevée et l'alimentation à faible valeur ohmique.

2. Montage suivant la revendication 1, caractérisé par le fait que respectivement pendant la durée du blocage du premier circuit de sélection (A1) pour le circuit indicateur (K) se trouve branchée à l'état actif une valeur de seuil (U, S), qui est rendue dépendante du signal (E) délivré une durée de cycle auparavant par le circuit indicateur, de telle sorte que ce seuil provoque le maintien de ce signal.

3. Montage suivant la revendication 1 ou 2, caractérisé par le fait que lesdits condensateurs (CS) ne sont pas branchés à l'état actif uniquement pendant l'état de fonctionnement «conversation/réception d'une sélection».

4. Montage suivant la revendication 3, caractérisé par le fait que des résistances respectives (RS) de forte valeur ohmique sont branchées en parallèle avec lesdits condensateurs (16).